# EUROPÄISCHE PATENTSCHRIFT

(11) **EP 1 199 336 B1**
(45) Veröffentlichungstag und Bekanntmachung des Hinweises auf die Patenterteilung: **15.01.2014**
(21) Anmeldenummer: 00122955.8
(22) Anmeldetag: 21.10.2000
(51) Int. Cl.: C08K 3/36, C09D 7/12, C09C 1/30, C08K 9/06

(54) **Funktionalisierte, strukturmodifizierte Kieselsäuren**
Functionalized, structure modified silicic acids
Silice fonctionalisée et à structure modifiée

(43) Veröffentlichungstag der Anmeldung: 24.04.2002
(73) Patentinhaber: Evonik Degussa GmbH, 45128 Essen (DE)
(72) Erfinder: Frahn, Stephanie, Dr., 63808 Haibach (DE); Ettlinger, Manfred, Dr., 63751 Karlstein (DE); Meyer, Jürgen, Dr., 63811 Stockstadt (DE)

(56) Entgegenhaltungen:
- EP-A- 0 280 851
- EP-A- 0 637 616
- EP-A- 0 808 880
- EP-A- 0 896 029
- WO-A-90/02779
- DE-A- 19 511 627
- DATABASE CHEMABS [Online] CHEMICAL ABSTRACTS SERVICE, COLUMBUS, OHIO, US; MATSUMURA, KAZUYUKI ET AL: "Surface treatment of silica" retrieved from STN Database accession no. 123:289764 XP002165082 & JP 07 126549 A (SHINETSU CHEM IND CO, JAPAN) 16. Mai 1995 (1995-05-16)
- L.N. LEWIS, D. KATSAMBERIS: "UV-curable abrasion-resistant and weatherable coatings with improved adhesion" J. APPL. POLYM. SCI, Bd. 42, Nr. 6, 1991, Seiten 1551-1556, XP002165547

## Beschreibung

Die Erfindung betrifft funktionalisierte, strukturmodifizierte Kieselsäuren, ein Verfahren zu ihrer Herstellung sowie ihre Verwendung.

Es ist bekannt, flammenhydrolytisch gewonnenes Siliziumdioxid mit einer Oberfläche von 40 bis 200 m²/g mit 3-Methacryloxypropyl-trimethoxysilan umzusetzen. Das erhaltene Siliziumdioxid wird anschließend mit einer weiteren Hülle aus (Meth)acrylatpolymeren beschichtet und anschliessend in Dentalmassen eingesetzt (EP 0 142 784 A1).

Die EP 0896 029 A offenbart pyrogene Kieselsäuren, welche an der Oberfläche mit Methacryloxypropylsilyl- oder mit Glycidyloxypropylsilylgruppen modifiziert sind. Auch die JP07-126549 A offenbart die Funktionalisierung der Oberfläche von Kieselsäuren mit verschiedenen Alkoxysilanen, beispielsweise mit Glycidyloxypropyltrimethoxysilan. Eine Strukturmodifizierung der Kieselsäuren durch mechanische Einwirkung und optionaler Nachvermahlung wird in beiden Publikationen nicht vorgeschlagen.

Es ist bekannt, eine Kieselsäure mit Hexamethyldisilazan zu silanisieren und die somit an der Oberfläche mit Trimethylsilylgruppen funktionalisierte Kieselsäure anschließend durch mechanische Einwirkung zu destrukturieren beziehungsweise zu verdichten (EP 0 808 880 A2).

Die bekannte Kieselsäure hat den Nachteil, dass sie nur schwer oder gar nicht in Lacksysteme eingearbeitet werden kann, weil ihre Verdickungswirkung zu hoch ist.
Es besteht somit die Aufgabe eine funktionalisierte, strukturmodifizierte Kieselsäure zu entwickeln, die diesen Nachteil nicht aufweist.

Gegenstand der Erfindung sind funktionalisierte und mittels mechanischer Einwirkung erfolgter Destrukturierung/Verdichtung und gegebenenfalls Nachvermahlung in einer Mühle strukturmodifizierte Kieselsäuren, gekennzeichnet durch auf der Oberfläche fixierte funktionelle Gruppen, wobei die Gruppen 3-Methacryloxypropylsilyl und/oder Glycidyloxypropylsilyl sind, mit den folgenden physikalisch-chemischen Kenndaten:

| | | |
|---|---|---|
| BET-Oberfläche | m²/g | 25 - 380 |
| Partikelgröße | nm | 6 - 45 |
| Stampfdichte | g/l | 50 - 400 |
| pH-Wert | | 3 - 10 |
| Kohlenstoffgehalt | % | 0,1 - 15 |
| DBP-Zahl | % | <200 |

Ein weiterer Gegenstand der Erfindung ist ein Verfahren zur Herstellung der erfindungsgemässen funktionalisierten, strukturmodifizierten Kieselsäuren, welches dadurch gekennzeichnet ist, dass man eine Kieselsäure in einem geeigneten Mischgefäß unter intensivem Mischen, gegebenenfalls zunächst mit Wasser oder verdünnter Säure und anschliessend mit einem Oberflächenmodifizierungsreagens oder einem Gemisch aus mehreren Oberflächenmodifizierungsreagentien besprüht, gegebenenfalls 15 bis 30 Minuten nachmischt und bei einer Temperatur von 100 bis 400 °C über einen Zeitraum von 1 bis 6 h tempert, anschliessend die funktionalisierte Kieselsäure durch mechanische Einwirkung destrukturiert/verdichtet und gegebenenfalls in einer Mühle nachvermahlt.

Erfindungsgemäß kann zum Destrukturieren zum Beispiel eine Kugelmühle eingesetzt werden. Die Nachvermahlung kann zum Beispiel mittels einer Luftstrahlmühle oder Stiftmühle erfolgen.

Als Kieselsäure kann bevorzugt eine pyrogen auf dem Wege der Flammenhydrolyse von SiCl₄ hergestellte Kieselsäure eingesetzt werden. Derartige pyrogene Kieselsäuren sind bekannt aus Ullmanns Enzyklopädie der technischen Chemie, 4. Auflage, Band 21, Seite 464 (1982).

In einer bevorzugten Ausführungsform der Erfindung kann eine pyrogene Kieselsäure mit einer Oberfläche von ca. 200 m²/g umgesetzt werden (Aerosil 200).

Als Oberflächenmodifizierungsreagens werden monomere Substanzen wie 3-Methacryloxypropyl-trialkoxysilan und/oder Glycidyloxypropyltrialkoxysilan eingesetzt, wobei Alkoxy gleich Methoxy-, Ethoxy- und/oder Propoxy - sein kann.

Die Menge an Silan kann in Bezug auf die Kieselsäure so dosiert werden, dass kein Überschuss entsteht. Gegebenenfalls kann der Überschuss an Silan bei der Temperung wieder entfernt werden.

Die erfindungsgemässe Kieselsäure kann in strahlungshärtenden Lacken, zum Beispiel UV-Lacken, eingesetzt werden.

Durch den Einsatz der erfindungsgemässen Kieselsäure wird vorteilhafterweise die Kratzfestigkeit der Oberflächen verbessert.

Die erfindungsgemässen Kieselsäuren haben nur einen geringen Einfluss auf die Rheologie des Lacksystems. Es können, weil die Viskosität des Lackes nur gering erhöht wird, größere Mengen an Kieselsäure in den Lack eingearbeitet werden.
Die funktionellen Gruppen auf der Kieselsäure können mit organischen Verbindungen reagieren.

Erfindungsgemäß können als Kieselsäure zur Silanisierung die pyrogen hergestellten Kieselsäuren gemäss Tabelle 1 eingesetzt werden.

**Tabelle 1**

| Physikalisch Chemische Daten von AEROSIL | | | | | | | | | |
|---|---|---|---|---|---|---|---|---|---|
| **Prüfmethode** | | **AEROSIL 90** | **AEROSIL 130** | **AEROSIL 150** | **AEROSIL 200** | **AEROSIL 300** | **AEROSIL 380** | **AEROSIL OX 50** | **AEROSIL TT 600** |
| **Verhalten gegenüber Wasser** | hydrophil | | | | | | | | |
| **Aussehen** | lockeres weißes Pulver | | | | | | | | |
| **Oberfläche nach BET¹⁾** | m²/g | 90±15 | 130±25 | 150±15 | 200±25 | 300±30 | 380±30 | 50±15 | 200±50 |
| **Mittlere Größe der Primärteilchen** | nm | 20 | 16 | 14 | 12 | 7 | 7 | 40 | 40 |
| **Stampfdichte** ca.-Wert²⁾ verdichtete Ware (Zusatz "V") W-Ware | g/l | 80 | 50 | 50 | 50 | 50 | 50 | 130 | 60 |
| | g/l | 120 | 120 | 120 | 120 | 120 | 120 | | |
| | | | | | | | | | |
| (Zusatz "VV")¹²⁾ | g/l g/l | | | 50/75 | 50/75 120 | 50/75 120 | | | |
| Trocknungsverlust³⁾ (2 Stunden bei 105 °C) bei Verlassen d. Lieferwerkes | % | <1,0 | <1,5 | <0,5⁹⁾ | <1,5 | <1,5 | <2,0 | <1,5 | <2,5 |
| Glühverlust^{4) 7)} (2 Stunden bei 1000°C) | % | <1 | <1 | <1 | <1 | <2 | <2,5 | <1 | <2,5 |
| pH-Wert⁵⁾ | | 3,7-4,7 | 3,7-4,7 | 3,7-4,7 | 3,7-4,7 | 3,7-4,7 | 3,7-4,7 | 3,8-4,8 | 3,6-4,5 |
| SiO₂⁸⁾ | % | >99,8 | >99,8 | >99,8 | >99,8 | >99,8 | >99,8 | >99,8 | >99,8 |
| Al₂O₃⁸⁾ | % | <0,05 | <0,05 | <0,05 | <0,05 | <0,05 | <0,05 | <0,08 | <0,05 |
| Fe₂O₃⁸⁾ | % | <0,003 | <0,003 | <0,003 | <0,003 | <0,003 | <0,003 | <0,01 | <0,003 |
| TiO₂⁸⁾ | % | <0,03 | <0,03 | <0,03 | <0,03 | <0,03 | <0,03 | <0,03 | <0,03 |
| HCI^{8) 10)} | % | <0,025 | <0,025 | <0,025 | <0,025 | <0,025 | <0,025 | <0,025 | <0,025 |
| Siebrückstand⁸⁾ (nach Mocker, 45 µm) | % | <0,05 | <0,05 | <0,05 | <0,05 | <0,05 | <0,05 | <0,2 | <0,05 |
| Gebindegröße (netto)¹¹⁾ | kg | 10 | 10 | 10 | 10 | 10 | 10 | 10 | 10 |

| | | | | | | | | | |
|---|---|---|---|---|---|---|---|---|---|
| 1) in Anlehnung an DIN 66131 | | | | | | | | | |
| 2) in Anlehnung an DIN ISO 787/XI, JIS K 5101/18 (nicht gesiebt) | | | | | | | | | |
| 3) in Anlehnung an DIN ISO 787/II, ASTM D 280. JIS K 5101/21 | | | | | | | | | |
| 4) in Anlehnung an DIN 55921, ASTM D 1208, JIS K 5101/23 | | | | | | | | | |
| 5) in Anlehnung an DIN ISO 787/IX, ASTM D 1208, JIS K 5101/24 6) in Anlehnung an DIN ISO 787/XVIII, JIS K 5101/20 | | | | | | | | | |
| 7) bezogen auf die 2 Stunden bei 105 °C getrocknete Substanz | | | | | | | | | |
| 8) bezogen auf die 2 Stunden bei 1000 °C geglühte Substanz 9) spezielle vor Feuchtigkeit schützende Verpackung | | | | | | | | | |
| 10) HCI-Gehalt ist Bestandteil des Glühverlustes | | | | | | | | | |
| 11) V-Ware wird in Säcken zu 20 kg geliefert | | | | | | | | | |
| 12) VV-Ware wird zur Zeit ausschließlich vom Werk Rheinfelden geliefert | | | | | | | | | |

### Beispiel 1

AEROSIL 200 wird mit 4 Teilen Wasser und 18 Teilen 3-Trimethoxysilyl-propylmethacrylat gemischt und bei 140 °C unter Schutzgas getempert. Die silanisierte Kieselsäure wird anschließend auf einer kontinuierlich arbeitenden Vertikalkugelmühle auf ca. 250 g/l verdichtet.
Die erhaltene Kieselsäure hat folgende Eigenschaften:

| | |
|---|---|
| BET [m²/g] | 138 |
| Stampfdichte [g/l] | 242 |
| pH-Wert | 4,6 |
| C-Gehalt | 5,7 |
| Trocknungsverlust [%] | 0,6 |
| Glühverlust [%] | 8,9 |
| DBP-Zahl [%] | 122 |

Versuche mit AEROSIL R 8200 und Kieselsäure gemäss Beispiel 1 in UV-härtenden Bindemitteln:

### Versuch 1:

Im Bindemittel Sartomer SR 494, Cray Valley, wird AEROSIL mit einem Dissolver eingerührt und anschließend 5 min bei 3000 Upm (Scheibe ∅ 45 mm) vordispergiert. Die Mischung wird in einer Labor-Perlmühle 15 min (AEROSIL R 8200), beziehungsweise 20 min (Kieselsäure gemäss Beispiel 1) bei 2500 Upm und einer Pumpleistung von 60 % (AEROSIL R 8200), beziehungsweise 40 % (Kieselsäure gemäss Beispiel 1) dispergiert. Als Perlen werden 1 mm Glasperlen verwendet. Die Dispergiergüte wird mit einem Grindometer, 25 µm, nach DIN ISO 1524 überprüft. Er muss kleiner 10 µm sein.

In den Lack werden 3 % Photoinitiator eingerührt. Die Applikation erfolgt mit Hilfe eines Spiralrakels (Auftrag 36 µm) auf schwarz lackierte Bleche. Die Härtung erfolgt mit einer UV-Anlage (Stromaufnahme der UV-Lampe (Quecksilberdampflampe) 7,5 - 10 mA, Bandgeschwindigkeit 10 m/min, Bestrahlungsstärke 1 W/cm).

### Versuch 2:

Im Bindemittel Craynor CN 1900, Cray Valley, wird AEROSIL mit einem Dissolver eingerührt und anschließend 5 min bei 3000 Upm (Scheibe ∅ 45 mm) vordispergiert. Die Mischung wird in einer Labor-Perlmühle 15 min bei 2500 Upm und einer Pumpleistung von 70 % (AEROSIL R 8200), beziehungsweise 40 % (Kieselsäure gemäss Beispiel 1) dispergiert. Als Perlen werden 1 mm Glasperlen verwendet. Die Dispergiergüte wird mit einem Grindometer, 25 µm, nach DIN ISO 1524 überprüft. Er muss kleiner 10 µm sein.

In den Lack werden 3 % Photoinitiator eingerührt. Die Applikation erfolgt mit Hilfe eines Spiralrakels (Auftrag 36 µm) auf schwarz lackierte Bleche. Die Härtung erfolgt mit einer UV-Anlage (Stromaufnahme der UV-Lampe (Quecksilberdampflampe) 7,5 - 10 mA, Bandgeschwindigkeit 10 m/min, Bestrahlungsstärke 1 W/cm)

Einarbeitung Kieselsäure gemäss R 8200:
Bereits während der Vordispergierung (10 % AEROSIL auf Festkörper Bindemittel) ist starkes Schäumen zu beobachten. Außerdem steigt die Viskosität durch das AEROSIL R 8200 stark an (siehe Tabelle 1). Bei der Dispergierung in der Perlmühle wird der Schaum verstärkt.
Eine Applikation des Lackes mit einer glatten, blasenfreien Oberfläche ist nicht möglich.

Einarbeitung Kieselsäure gemäss Beispiel 1:
Während der Vordispergierung (10 % VP auf Festkörper Bindemittel) ist ein leichtes Schäumen zu beobachten, wobei der Schaum nach der Perlmühlendispergierung verschwunden ist.
Nach der Applikation und Vernetzung des Films ergibt sich eine glatte, hoch glänzende Oberfläche.

**Tabelle 2**

| Grindometerwerte, Brookfield-Viskositäten: | | | | |
|---|---|---|---|---|
| | **Grindometerwert [µm]** | **Viskosität [mPa s]** | | **Scherverdünnung 6/60** |
| | | **6 Upm** | **60 Upm** | |
| **Sartomer SR 494** | - | 160 | 158 | 1,0 |
| **SR 494 + Aerosil R 8200** | <10 | 35.900 | 6.830 | 5,2 |
| **SR 494 + Kieselsäure gemäss Beispiel 1** | <10 | 451 | 389 | 1,1 |
| **Craynor CN 1900** | - | 481 | 468 | 1,0 |
| **CN 1900 + Aerosil R 8200** | <10 | 53.300 | 10. 000 | 5,3 |
| **CN 1900 + Kieselsäure gemäss Beispiel 1** | <10 | 1.000 | 950 | 1,1 |

### Kratzversuche:

Mit Hilfe einer Scheuer- und Waschbeständigkeitsprüfmaschine (Fa. Erichsen) werden die Bleche mit einer Quarz/Wasser Aufschlämmung (100 g Wasser + 1 g Marlon A 350, 0,25 %ig + 5 g Sikron F500) mit 100 Hüben gescheuert. Der Glanz vor und 10 min nach dem Scheuern wird mit einem Reflektometer (20 ° Einstahlwinkel) bestimmt.

**Tabelle 3**

| Reflektometerwerte vor und nach dem Kratzen: | | | |
|---|---|---|---|
| | **20 °-Reflektometerwert** | | **Restglanz** |
| | **vor** | **nach** | **[%]** |
| **Sartomer SR 494** | 82,0 | 50,0 | 61,0 |
| **SR 494 + Kieselsäure gemäss Beispiel 1** | 80,5 | 65,2 | 81,0 |
| **Craynor CN 1900** | 89,6 | 46,5 | 51,9 |
| **CN 1900 + Kieselsäure gemäss Beispiel 1** | 87,8 | 67,4 | 76,8 |

## Patentansprüche

1. Funktionalisierte und mittels mechanischer Einwirkung erfolgter Destrukturierung/Verdichtung und gegebenenfalls Nachvermahlung in einer Mühle strukturmodifizierte Kieselsäure, **gekennzeichnet durch** auf der Oberfläche fixierte funktionelle Gruppen, wobei die Gruppen 3-Methacryloxypropylsilyl und/oder Glycidyloxypropylsilyl sind, und **durch** die folgenden physikalisch-chemischen Kenndaten:
| | | |
|---|---|---|
| BET-Oberfläche | m²/g | 25 - 380 |
| Primärteilchengröße | nm | 6 - 45 |
| Stampfdichte | g/l | 50 - 400 |
| pH-Wert | | 3 - 10 |
| Kohlenstoffgehalt | % | 0,1 - 15 |
| DBP-Zahl | % | <200. |

2. Verfahren zur Herstellung der funktionalisierten, strukturmodifizierten Kieselsäure gemäss Anspruch 1, **dadurch gekennzeichnet, dass** man eine Kieselsäure in einem geeignetem Mischgefäß unter intensivem Mischen, gegebenenfalls zunächst mit Wasser oder verdünnter Säure und anschliessend mit einem Oberflächenmodifizierungsreagens oder einem Gemisch aus mehreren Oberflächenmodifizierungsreagentien besprüht, wobei als Oberflächenmodifizierungsreagens 3-Methacryloxypropyl-trialkoxysilan und/oder Glycidyloxypropyltrialkoxysilan eingesetzt wird, worin Alkoxy gleich Methoxy-, Ethoxy- und/oder Propoxy - sein kann, gegebenenfalls 15 bis 30 Minuten nachmischt und bei einer Temperatur von 100 bis 400 °C über einen Zeitraum von 1 bis 6 h tempert, anschliessend die funktionalisierte Kieselsäure durch mechanische Einwirkung destrukturiert/verdichtet und gegebenenfalls in einer Mühle nachvermahlt.

3. Verwendung der funktionalisierten, strukturmodifizierten Kieselsäure gemäss Anspruch 1 in Lacken.

## Claims

1. Silica functionalized and structurally modified by mechanical destructuring/compaction and optionally post-grinding in a mill, **characterized by** functional groups fixed on the surface, the groups being 3-methacryloyloxypropylsilyl and/or glycidyloxypropylsilyl, and by the following physicochemical data:
| | | |
|---|---|---|
| BET surface area | m²/g | 25-380 |
| Primary particle size | nm | 6-45 |
| Tapped density | g/l | 50-400 |
| pH | | 3-10 |
| Carbon content | % | 0.1-15 |
| DBP number | % | <200. |

2. Process for preparing the functionalized, structurally modified silica according to Claim 1, **characterized in that** a silica is sprayed in a suitable mixing vessel with intensive mixing, optionally first with water or dilute acid and subsequently with a surface-modifying reagent or with a mixture of two or more surface-modifying reagents, with 3-methacryloyloxypropyltrialkoxysilane and/or glycidyl-oxypropyltrialkoxysilane being used as surface-modifying reagent, in which alkoxy may be methoxy-, ethoxy- and/or propoxy-, with optional mixing for 15 to 30 minutes thereafter and with heating at a temperature of 100 to 400°C over a period of 1 to 6 hours, after which the functionalized silica is mechanically destructured/compacted and optionally post-ground in a mill.

3. Use of the functionalized, structurally modified silica according to Claim 1 in lacquers.

## Revendications

1. Silice fonctionnalisée et à structure modifiée par déstructuration/compactage réalisé(e) par un effet mécanique et le cas échéant par post-broyage dans un broyeur, **caractérisée par** des groupes fonctionnels fixés sur la surface, les groupes étant les groupes 3-méthacryloxypropylsilyle et/ou glycidyloxypropylsilyle, et par les données physico-chimiques suivantes :
| | | |
|---|---|---|
| Surface BET | m²/g | 25-380 |
| Grosseur des particules primaires | nm | 6-45 |
| Densité tassée | g/l | 50-400 |
| pH | | 3-10 |
| Teneur en carbone | % | 0,1-15 |
| Indice DBP | % | < 200. |

2. Procédé pour la préparation de la silice fonctionnalisée, à structure modifiée selon la revendication 1, **caractérisé en ce qu'**on asperge une silice dans un récipient de mélange approprié, sous mélange intensif, le cas échéant d'abord avec de l'eau ou un acide dilué, puis avec un réactif de modification de surface ou un mélange de plusieurs réactifs de modification de surface, en utilisant comme réactif de modification de surface du 3-méthacryloxypropyltrialcoxysilane et/ou du glycidyloxypropyltrialcoxysilane, alcoxy pouvant être méthoxy, éthoxy et/ou propoxy, on post-agite le cas échéant pendant 15 à 30 minutes et on traite thermiquement à une température de 100 à 400°C pendant un laps de temps de 1 à 6 h, on déstructure/compacte ensuite la silice fonctionnalisée par un effet mécanique et on post-broie le cas échéant dans un broyeur.

3. Utilisation de la silice fonctionnalisée, à structure modifiée selon la revendication 1 dans des laques.
